Europäisches Patentamt

European Patent Office

Office européen des brevets

(11) Veröffentlichungsnummer: **0 309 820**
**A2**

## (12) EUROPÄISCHE PATENTANMELDUNG

(21) Anmeldenummer: 88115093.2

(22) Anmeldetag: 15.09.88

(51) Int. Cl.⁴: **E04F 17/04**

(30) Priorität: 30.09.87 CH 3796/87

(43) Veröffentlichungstag der Anmeldung:
05.04.89 Patentblatt 89/14

(84) Benannte Vertragsstaaten:
AT DE FR

(71) Anmelder: **Schmidlin AG**
**Zürichstrasse 19**
**CH-8910 Affoltern a.A.(CH)**

(72) Erfinder: **Schmidlin, Walter**
**Mühlrütistrasse 12**
**CH-8010 Affoltern am Albis(CH)**

(74) Vertreter: **Scheidegger, Zwicky, Werner & Co.**
**Stampfenbachstrasse 48 Postfach**
**CH-8023 Zürich(CH)**

(54) **Lüftungskanal-Versteifung.**

(57) In einem Lüftungskanal (1) sind zur Versteifung gegenüberliegende Kanalwände (2,3) auf der Kanalmitte durch einen Profilstab (4) miteinander starr verbunden. Der Profilstab (4) besitzt einen rautenförmigen Querschnitt, bei dem bezüglich einer durch die Mitte des Profilstabes verlaufende Ebene einander gegenüberliegende, sich verjüngende Querschnittsbereiche in je einer Schmalkante (5,6) enden, welche beim montierten Profilstab (4) in die Kanallängsrichtung zeigen. Aufgrund der windschnittigen Form des Profilstabes (4) wird eine erhebliche Herabsetzung des Druckverlustes in dem Lüftungskanal (1) erreicht und ausserdem ist die durch die Luftströmung an der in einem Lüftungskanal in regelmässigen Längsabständen angeordneten Vielzahl von Profilstäben entstehende Geräuschentwicklung wesentlich reduziert.

Fig. 1

EP 0 309 820 A2

# Lüftungskanal-Versteifung

Die Erfindung betrifft eine Lüftungskanal-Versteifung zwischen einander gegenüberliegenden Wänden des Kanals. Diese Wände bestehen insbesondere bei Lüftungskanälen mit einem grossen Querschnitt aus relativ dünnem Blech, um das Gewicht in Grenzen zu halten, weshalb Lüftungskanäle dieser Art mit Hilfe von etwa in der Kanalmitte zwischen gegenüberliegenden Kanalwänden sich erstreckenden Stützen ausgesteift werden. Lüftungskanäle bestehen aus aneinander anschliessenden und miteinander verbundenen Kanalabschnitten einer bestimmten Länge, beispielsweise zwei Meter, und wenn eine Seitenlänge des im Querschnitt rechteckförmigen Lüftungskanals ein bestimmtes Mass von beispielsweise 1,60 m überschreitet, müssen pro Kanalabschnitt sogar zwei Versteifungen in Kanallängsrichtung in gleichmässigen Abständen voneinander angeordnet werden.

Bisher hat man für die Versteifungen Rohre verwendet, die an den Kanalseitenwänden mittels Verschraubung befestigt werden. In einem langen Lüftungskanal mit einer Vielzahl von Versteifungsrohren und einem Gebläse an einem Kanalende verursachen die Versteifungsrohre einen merkbaren Druckverlust und ausserdem entstehen durch die Strömung um einen runden Körper und die dabei auftretenden Turbulenzen erhebliche Geräusche.

Die Aufgabe der Erfindung war deshalb, eine Versteifung mit gleicher Wirkung aber wesentlich reduziertem Druckverlust zu schaffen, bei der auch eine wesentlich geringere Geräuschentwicklung vorhanden ist. Dies wird durch die Massnahme nach Anspruch 1 erreicht. In bevorzugter Ausgestaltung besteht die Versteifung aus einem Profilstab, dessen Querschnitt rautenförmig mit abgerundeten Ecken ausgebildet ist, so dass eine schmale Kante des Profilstabs von der Luft angeströmt wird. Zur Gewichtseinsparung weist der Profilstab über seine Länge durchgehend sich erstreckende Hohlräume auf, von denen einer auf der Stablängsachse im Querschnitt kreisförmig und zwei weitere in den sich verjüngenden Stababschnitten im Querschnitt dreieckig ausgebildet sind. Ein Ausführungsbeispiel des Erfindungsgegenstandes wird nachfolgend näher erläutert. Es zeigen:

Fig. 1 einen Lüftungskanal-Abschnitt mit zwei zur Versteifung dienenden Profilstäben, in schaubildlicher Darstellung;

Fig. 2 und 3 die Stirnansicht und Seitenansicht eines Profilstabes in grösserem Massstab.

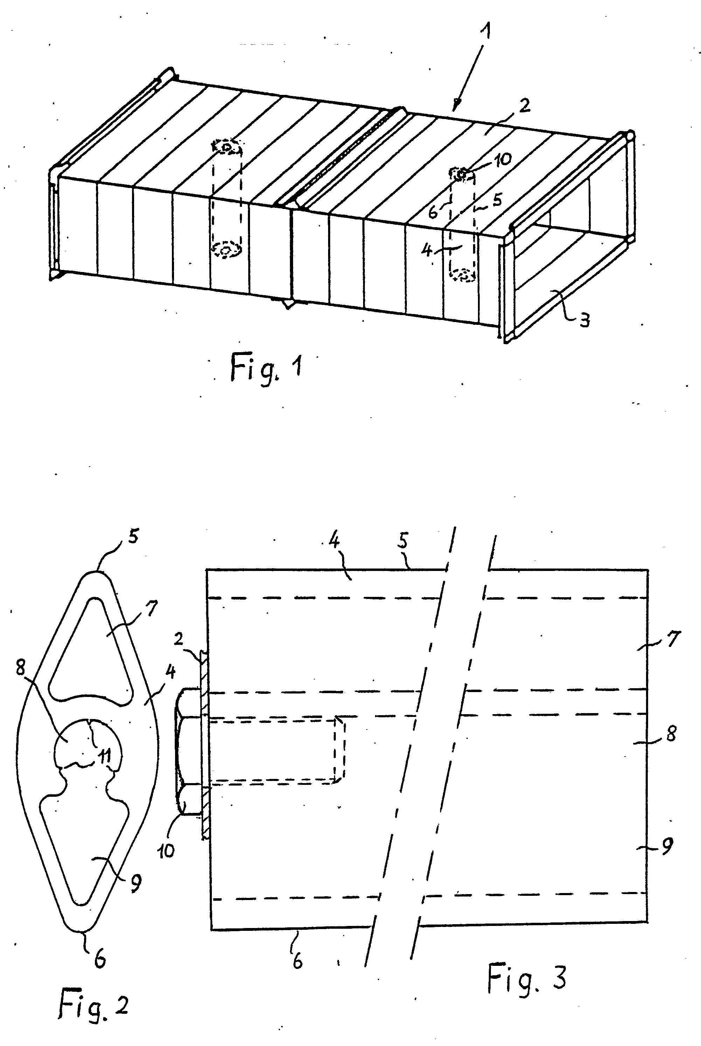

Ein in Fig. 1 dargestellter Lüftungskanal-Abschnitt 1 ist zwischen den einander gegenüberliegenden Kanalwänden 2 und 3 durch einen Profilstab 4 versteift. In dem Lüftungskanal-Abschnitt 1 sind zwei derartige Profilstäbe 4 in Kanallängsrichtung in Abständen voneinander angeordnet, und zwar derart, dass jeder Profilstab, der in Fig. 2 in grösserem Massstab dargestellt ist, und einen bezüglich einer Axialebene nach gegenüberliegenden Seiten sich verjüngenden Querschnitt mit den Schmalkanten 5 und 6 besitzt, mit diesen Schmalkanten 5 und 6 in die Kanallängsrichtung zeigend ausgerichtet ist. Der Profilstab 4 gemäss Fig. 2 ist im Querschnitt oder in der Stirnansicht rautenförmig mit abgerundeten Ecken ausgebildet, und er besitzt zwecks Gewichtsreduzierung über seine Länge durchgehend sich erstreckende Hohlräume 7,8 und 9, wobei der auf der Stablängsachse verlaufende, im Querschnitt kreisförmige Hohlraum 8 und der anschliessende, im Querschnitt dreieckige Hohlraum 9 ineinanderübergehend verbunden sind, wobei durch teilweises Weglassen der Innenwand eine noch weitere Gewichtsreduzierung erzielt wird. Der nicht mehr vollständig kreisförmige Hohlraum 8 genügt, um eine Befestigungsschraube 10 aufzunehmen. Der Profilstab 4 besteht aus Leichtmetall und zur Befestigung dient eine durch eine Bohrung in jeder der Kanalseitenwände 2 und 3 hindurchgeführte selbstschneidende Befestigungsschraube 10. Zu diesem Zweck sind in dem Hohlraum 8 umfangsmässig verteilt drei kleine rippenartige Vorsprünge 11 vorgesehen, die das Einführen der selbstschneidenden Befestigungsschraube 10 ermöglichen. Dadurch ist die Befestigung des Profilstabes äusserst einfach und schnell durchführbar.

Man erreicht mit dieser Art der Formgebung für den zur Versteifung dienenden Profilstab je nach Strömungsgeschwindigkeit der Luft im Kanal eine Herabsetzung des Druckverlustes bis zu einem weniger als die Hälfte botragenden Wert. Dadurch kann auch die Leistung des am Ende des Lüftungskanals angeordneten Gebläses entsprechend geringer gewählt werden. Ausserdem wird eine spürbare Reduzierung der Geräuschentwicklung erreicht.

## Ansprüche

1. Lüftungskanal-Versteifung zwischen einander gegenüberliegenden Wänden des Kanals, dadurch gekennzeichnet, dass die Versteifung aus einem den lichten Kanalquerschnitt quer durchsetzenden Profilstab (4) mit einem bezüglich einer Axialebene nach gegenüberliegenden Seiten in Kanallängsrichtung sich verjüngenden Querschnitt besteht und mindestens an jedem Stabende ein axialer Hohraum (8) für ein Befestigungsmittel (10) zum Verbinden des Profilstabs (4) mit den Kanalwänden (2,3) ausgebildet ist.

2. Lüftungskanal-Versteifung nach Anspruch 1, dadurch gekennzeichnet, dass der Querschnitt des Profilstabs (4) im Umriss rautenförmig mit abgerundeten Ecken ausgebildet ist und der Profilstab über seine Länge durchgehend sich erstreckende Hohlräume (7,8,9) aufweist, von denen ein Hohlraum (8) auf der Stablängsachse im Querschnitt kreisförmig ist und zwei weitere Hohlräume (7,9) in den sich verjüngenden Stababschnitten im Querschnitt dreieckförmig ausgebildet sind.

3. Lüftungskanal-Versteifung nach Anspruch 2, dadurch gekennzeichnet, dass ein im Querschnitt dreieckförmiger Hohlraum (9) und der im Querschnitt kreisförmige Hohlraum (8) unter Weglassung eines Bereichs der Zwischenwand in Verbindung miteinander stehen.

4. Lüftungskanal-Versteifung nach Anspruch 2, dadurch gekennzeichnet, dass der Profilstab (4) aus Leichtmetall besteht und in den im Querschnitt kreisförmigen Hohlraum (8) auf der Stablängsachse eine durch eine Bohrung in der Kanalwand (2,3) sich erstreckende, selbstschneidende Befestigungsschraube (10) einschraubbar ist.

**Fig. 1**

**Fig. 2**

**Fig. 3**